# EUROPEAN PATENT SPECIFICATION

(11) **EP 0 546 600 B1**
(45) Date of publication and mention of the grant of the patent: **14.02.1996**
(21) Application number: 92203598.5
(22) Date of filing: 23.11.1992
(51) Int. Cl.: G06T 5/40

(54) **Method of determining the signal range that is relevant for reproduction**
Verfahren zur Bestimmung des geeigneten Bildsignalbereichs zur Darstellung
Méthode pour déterminer la gamme des signaux d'image approprié à sa reproduction

(30) Priority: 09.12.1991 EP 91203212
(43) Date of publication of application: 16.06.1993
(73) Proprietor: AGFA-GEVAERT naamloze vennootschap, B-2640 Mortsel (BE)
(72) Inventor: Vuylsteke, Pieter, c/o Agfa-Gevaert N.V., B-2640 Mortsel (BE)

(56) References cited:
- WO-A-91/09327
- US-A- 4 914 295

## Description

### Field of the invention.

The present invention is in the field of digital image processing. The invention more specifically relates to a method of determining a subrange of a digital signal representing a radiographic image that is most relevant for diagnosis and that will be used for reproduction.

### Background of the invention

In the field of digital radiography a system has been developed wherein x-rays transmitted by an exposed object are stored on a photostimulable phosphor screen. Examples of photostimulable phosphors that can be used are extensively described in European patent application 91200511.3 filed on 8.03.91.

The photostimulable phosphor screen is read-out by stimulating it with laser light so that it liberates its latent image by the emission of imagewise modulated light. The emitted light is then detected and converted into an analog electrical representation for example by means of a photomultiplier. The signal is then digitized and is subsequently used to control the hard copy recording in image reproducing system such as a laser recorder. For diagnostic purposes the reproduction is viewed and analysed on an lightbox.

When an image stored in such a photostimulable phosphor screen is read-out and is converted into a digital signal representation, this signal may occupy a dynamic range that is much larger than the dynamic range of the recording medium for example of a photographic film or of a display device that is used.

When the signal range is confined to only that part of the signal range that comprises information that is relevant for diagnosis, the contrast in the reproduction and hence also the image quality of the reproduction or the display can be enhanced by mapping only said part of the image signal into density values within the dynamic range of the recording medium or display unit.

In this case a selection is to be performed of the signal range to be reproduced or displayed out of the entire read-out signal range.

In US patent 4,851,675 issued July 25, 1989 a method is described of reproducing an image provided by its signal representation obtained by reading out a photostimulable phosphor sheet having a radiation image stored therein. First the detection range of the used detector is adjusted to a range wider than an expected emission range and next an image signal is extracted in a range useful for reproduction. The range is determined by histogram analysis. The program for determining the image signal range on the basis of the results of the histogram analysis may be determined experimentally. The extracted image signal is utilized for the reproduction.

In US-A-4 914 925 (FUTI PHOTO FILM Co.) a digital radiography imaging apparatus is described wherein peaks near the maximum or minimum signal values (Sₘₐₓ and Sₘᵢₙ) are discarded, so that only the remaining luminance range f is considered relevant for the diagnosis.

### Objects of the invention

It is an object of the present invention to provide a method of determining a signal range relevant for diagnosis out of a wider signal range obtained by reading out a photostimulable phosphor screen and by digitizing the read-out signal.

It is a further object to determine extreme values Sₘᵢₙ and Sₘₐₓ of said range.

### Statement of the invention

The present invention provides a method of reading out an image stored in a photostimulable phosphor screen by scanning said screen with stimulating rays, detecting the light emitted upon stimulation and converting it into a digital signal representation, creating a histogram of said image signal, extracting an image signal in a signal range useful for reproduction by analysing said histogram and recording a visible image on a recording material by utilizing said extracted signal characterised in that said extracted image signal is defined by the steps of
- determining the maximum histogram frequency,
- selecting a value t smaller than the maximum histogram frequency,
- determining (a) histogram peak(s) as a range of successive signal values having a corresponding histogram frequency that is larger than t,
- determining the most relevant histogram peak as the histogram peak for which the summation of all histogram frequencies corresponding with signal values within said peak is maximum,
- determining minimum and maximum signal values within said most relevant histogram peak, and
- determining extreme values of the signal range to be extracted as said minimum value decreased with a small offset d₀ and said maximum value increased by a small offset value d₁.

In a modified embodiment of the present invention the most relevant histogram peak is determined as the histogram peak for which the range of successive signal values within the peak is maximum.

The value t is always smaller than the maximum histogram frequency, it can be specified as a ratio F (0<F<1) of the maximum histogram frequency. Typically F is equal to 0.10.

Alternatively it can be defined as a ratio of the maximum frequency in the signal range of the most relevant histogram peak for reasons explained hereinafter.

The maximum histogram frequency may correspond with the maximum of the histogram peak that represents the background area. The maximum of this peak may vary from image to image in dependence on the amount of background information that is present in an image.

Consequently, the value "t" which is selected as a specific fraction of the maximum histogram frequency may change in dependence on the height of this peak and hence the values Sₘᵢₙ and Sₘₐₓ may also change.

This problem has been solved by defining "t" as a fraction of the maximum frequency in the signal range of the most relevant histogram peak itself.

However, this most relevant histogram peak is in its turn determined by a procedure that makes use of the above-mentioned value "t". Therefore "t" is determined iteratively.

More specifically, "t" is selected as a specific fraction of the maximum histogram frequency, then with this value "t" a first estimate of the most relevant histogram peak is determined. A new value "t'" is obtained as a specific fraction of the maximum frequency in the signal range of said first estimate of the most relevant histogram peak. This value "t" is next used to determine a second, improved estimate of the most relevant peak in the same way as described above. This step is eventually repeated although in most cases a single iteration step is sufficient.

The small offset values d₀ and d₁ can be constant. The values are normally very small, typically they are equal to 0.1 on a logarithmic scale.

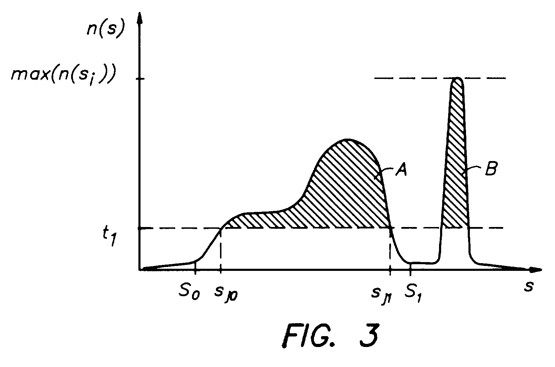

For each specific type of examination the slope of the histogram at threshold crossing points (this is at the location of (sⱼ₀,t) and (sⱼ₁,t) in figure 3, is nearly constant. Therefore a linear extrapolation is performed in said threshold crossing point to find the values sₘᵢₙ and sₘₐₓ at the intersection of the straight line obtained by the linear extrapolation and the signal axis.

So, d₀ and d₁ can be specified as a monotonically increasing function of the value t, for example d₀=c₀.t+b₀ and d₁=c₁.t+b₁. c₀ and c₁ being positive and non-zero.

### Brief description of the drawings

Particular aspects of the present invention as well as preferred embodiments thereof will be explained by means of the corresponding drawings wherein
Fig. 1 generally shows a system for reading out an image stored in a photostimulable phosphor screen,
Fig. 2 is a block scheme illustrating the data flow,
Fig. 3 is a histogram of a read-out signal.

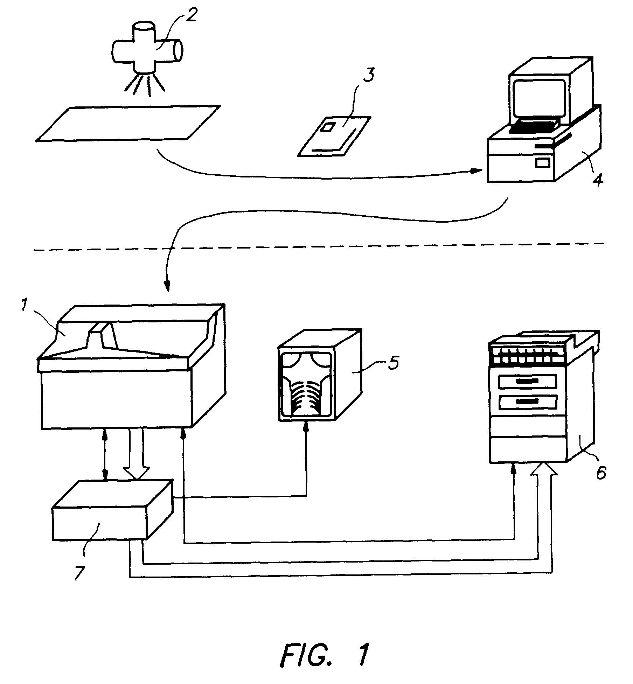

Figure 1 generally shows an apparatus in which the method of the invention can be applied.

A radiation image of an object was recorded on a photostimulable phosphor screen (3) by exposing (2) said screen to x-rays transmitted through the object (not shown). The stimulable phosphor screen was conveyed in a cassette (3) provided with a electrically erasable programmable read only memory (EEPR0M). In an identification station 4 various kinds of data, for example patient identification data (name, date of birth) and data relating to the exposure and/or to the signal processing were recorded onto the EEPROM.

In a radiation image read-out apparatus 1 the latent image stored in the photostimulable phosphor screen was read-out by scanning the phosphor screen with stimulating rays emitted by a laser. The stimulating rays were deflected into the main scanning direction by means of galvanometric deflection. The subscanning was performed by transporting the phosphor screen in the subscanning direction. The stimulated emission was directed onto a photomultiplier for conversion into an electrical image representation.

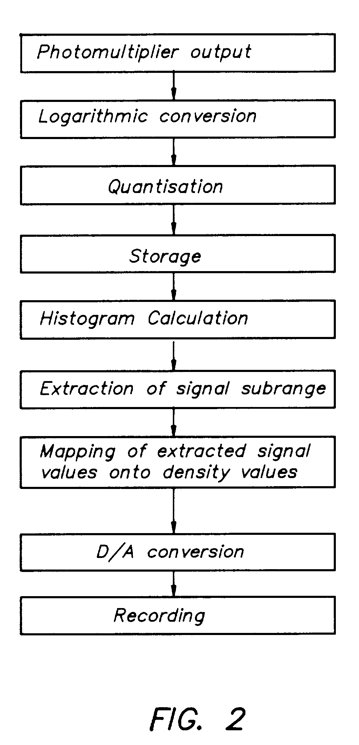

The subsequent data flow is illustrated in figure 2. The output signal of the photomultiplier was converted into a logaritmic quantity 'log exposure' and next the signal was quantised. This quantised image signal, called the raw image signal, was sent to the image processor (figure 1, numeral 7) where it was stored in an internal buffer. Without any modifications it was also sent from the image processor to the review console 5 where it was temporarily stored on a hard disc. This back up ensured that the signal was never lost, even not when any of the components of the apparatus would fail and that the signal could be retrieved for any kind of later processing, for example processing with different parameter setting. This feature could be used when the result of the on-line processing was unsatisfactory due to bad exposure conditions or inadequate selection of the processing parameters.

In the following step the histogram of the image signal was produced and was evaluated as described furtheron. A signal range relevant for diagnostic purposes was then extracted out of the entire range of image representing signals. The extremities of this selected range were determined by evaluation of said histogram.

Next the curve representing the mapping of signal values (in this case log(E) values) into corresponding density values was to be determined.

Finally the signal values in the ectracted signal range were mapped onto density values in accordance with the above curve. Then the processed signal was applied to a digital to analog converter, the output of the converter modulates the output of a recorder 6, here a laser recorder, for making a hard-copy on photographic film.

The image corresponding with the extracted signal range could also be displayed on a display device such as a monitor.

The selection of the signal range that will be used to drive the reproducing apparatus will be explained with reference to figure 3 representing an example of an image histogram.

The ordinate represents signal value s (for example log E values) and the abscis gives the number of times a certain signal value occurs.

According to the method of the present invention first the maximum value max n(sᵢ) of all histogram values n(sᵢ) is determined. Next a frequency t smaller than the maximum histogram value (also called histogram frequency) is chosen and histogram peaks are determined for which successive signal values have corresponding histogram frequencies that are always larger than t. In this example two peaks are found, they are shaded and denoted by A and B.

Then the most relevant histogram peak is determined, said most relevant histogram peak defined as the histogram peak out of the selection of the peaks determined hereinbefore for which the summation of all histogram frequencies corresponding with signal values comprised in said peak is maximum. In this example this is the peak "A".

For that peak the minimum and maximum signal values sⱼ₀ and sⱼ₁ are determined, the minimum value is decreased with a small offset d₀ and the maximum value is increased by a small offset d₁. The range in between the minimum value decreased with said offset (Sₘᵢₙ in figure 3) and the maximum value increased by said offset (Sₘₐₓ in figure 3) is extracted as the relevant signal range for diagnosis.

## Claims

1. A method of reading out an image stored in a photostimulable phosphor screen by scanning said screen with stimulating rays, detecting the light emitted upon stimulation and converting it into a digital signal representation, creating a histogram of said image signal, extracting an image signal in a signal range useful for reproduction by analysing said histogram and recording a visible image on a recording material by utilizing said extracted signal characterised in that said extracted image signal is defined by the steps of
- determining the maximum histogram frequency (max (n(sᵢ))),
- selecting a value t smaller than the maximum histogram frequency,
- determining at least one histogram peak as a range of successive signal values having a corresponding histogram frequency that is larger than t,
- determining the most relevant histogram peak as the histogram peak for which the summation of all histogram frequencies corresponding with signal values within said peak is maximum,
- determining minimum (S_{J0}) and maximum (S_{J1}) signal values within said most relevant histogram peak,
- determining extreme values of the signal range to be extracted as said minimum value decreased with a small offset d₀ and said maximum value increased by a small offset value d₁.

2. Method according to claim 1 modified in that the most relevant histogram peak is determined as the histogram peak for which the range of successive signal values within the peak is maximum.

3. Method according to claim 1 wherein t is defined as a ratio F (0<F<1) of the maximum histogram frequency.

4. Method according to claim 1 wherein t is defined as a ratio F' comprised between zero and one of the maximum frequency in the signal range of the most relevant histogram peak and wherein t is determined iteratively.

5. Method according to claim 1 wherein d₀ and d₁ are constant.

6. Method according to claim 1 wherein d₀ and d₁ are specified as a monotonically increasing function of the value t.

7. Method according to claim 1 wherein the values d₀ and d₁ depend on the examination type.

8. Method according to claim 1 wherein an image corresponding with said extracted image signal is displayed on a monitor.

## Patentansprüche

1. Verfahren zum Auslesen eines in einem ausleuchtbaren Leuchtschirm gespeicherten Bildes durch Abtasten des Schirms mit Ausleuchtstrahlen, Erfassen des bei Ausleuchten ausgestrahlten Lichts und dessen Umwandlung in eine Digitalsignaldarstellung, Erstellung eines Histogramms dieses Bildsignals, Extrahieren eines Bildsignals in einem zur Wiedergabe geeigneten Signalbereich durch Auswertung des Histogramms, sowie Aufzeichnung eines sichtbaren Bildes auf einem Aufzeichnungsmaterial durch Verwendung des extrahierten Signals, dadurch gekennzeichnet, daß das extrahierte Bildsignal durch die folgenden Schritte bestimmt wird:
- Ermittlung der maximalen Histogrammfrequenz (max (n(sᵢ))),
- Wahl eines Werts t, der kleiner ist als die maximale Histogrammfrequenz,
- Ermittlung mindestens eines Histogrammpeaks als Bereich von aufeinanderfolgenden Signalwerten mit einer entsprechenden Histogrammfrequenz, die größer ist als t,
- Ermittlung des maßgeblichsten Histogrammpeaks als jenen Histogrammpeak, für den die Summierung aller Signalwerten innerhalb des Peaks entsprechenden Histogrammfrequenzen einen Maximalwert ergibt,
- Ermittlung von Minimalwerten (sⱼ₀) und Maximalwerten (sⱼ₁) für das Signal innerhalb des maßgeblichsten Histogrammpeaks,
- Ermittlung von Extremwerten für den zu extrahierenden Signalbereich als den um eine kleine Verschiebung d₀ verminderten Minimalwert und den um einen kleinen Verschiebungswert d₁ erhöhten Maximalwert.

2. Verfahren nach Anspruch 1, insofern abgewandelt, als der maßgeblichste Histogrammpeak als jener Histogrammpeak ermittelt wird, für den der Bereich aufeinanderfolgender Signalwerte innerhalb des Peaks einen Maximalwert erreicht.

3. Verfahren nach Anspruch 1, wobei t als ein Verhältnis F (0<F<1) der maximalen Histogrammfrequenz bestimmt wird.

4. Verfahren nach Anspruch 1, wobei t als Verhältnis F' bestimmt wird, das zwischen null und eins der maximalen Frequenz im Signalbereich des maßgeblichsten Histogrammpeaks liegt, und wobei t iterativ ermittelt wird.

5. Verfahren nach Anspruch 1, wobei d₀ und d₁ konstant sind.

6. Verfahren nach Anspruch 1, wobei d₀ und d₁ als monoton zunehmende Funktion des Wertes t angegeben sind.

7. Verfahren nach Anspruch 1, wobei die Werte d₀ und d₁ vom Typ der Untersuchung abhängen.

8. Verfahren nach Anspruch 1, wobei ein dem extrahierten Bildsignal entsprechendes Bild auf einem Bildschirm dargestellt wird.

## Revendications

1. Méthode de lecture d'une image stockée dans un écran de luminophore photostimulable en balayant ledit écran par des rayons de stimulation, détectant la lumière émise par stimulation et convertissant celle-ci en une représentation de signal numérique, créant un histogramme dudit signal d'image, extrayant un signal d'image dans une gamme de signaux utile pour la reproduction en analysant ledit histogramme et enregistrant une image visible sur une matière d'enregistrement en utilisant ledit signal extrait caractérisé en ce que ledit signal d'image extrait est défini par les étapes de
- détermination de la fréquence d'histogramme maximum (max (n(sᵢ))),
- sélection d'une valeur t plus petite que la fréquence d'histogramme maximum,
- détermination d'au moins une pointe d'histogramme comme une gamme de valeurs de signaux successives ayant une fréquence d'histogramme correspondante qui est plus grande que t,
- détermination de la pointe d'histogramme la plus pertinente comme pointe d'histogramme pour laquelle l'addition de toutes les fréquences d'histogramme correspondantes aux valeurs de signaux au sein de ladite pointe est maximum,
- détermination de valeurs de signaux minimum (Sⱼ₀) et maximum (Sⱼ₁) au sein de ladite pointe d'histogramme la plus pertinente,
- détermination de valeurs extrêmes de la gamme de signaux à extraire comme ladite valeur minimum diminuée par un petit décalage d₀ et ladite valeur maximum augmentée par une petite valeur de décalage d₁.

2. Méthode selon la revendication 1, modifiée en ce que la pointe d'histogramme la plus pertinente est déterminée comme la pointe d'histogramme pour laquelle la gamme de valeurs de signaux successives au sein de la pointe est maximum.

3. Méthode selon la revendication 1, dans laquelle t est définie comme un rapport F (0<F<1) de la fréquence d'histogramme maximum.

4. Méthode selon la revendication 1, dans laquelle t est définie comme un rapport F' compris entre zéro et un de la fréquence maximum dans la gamme de signaux de la pointe d'histogramme la plus pertinente et dans laquelle t est déterminée de façon itérative.

5. Méthode selon la revendication 1, dans laquelle d₀ et d₁ sont constantes.

6. Méthode selon la revendication 1, dans laquelle d₀ et d₁ sont spécifiées comme une fonction croissant de façon monotone de la valeur t.

7. Méthode selon la revendication 1, dans laquelle d₀ et d₁ dépendent du type d'examen.

8. Méthode selon la revendication 1, dans laquelle une image correspondant audit signal d'image extrait est affichée sur un moniteur.
